# EUROPEAN PATENT SPECIFICATION

(11) **EP 0 926 369 B1**
(45) Date of publication and mention of the grant of the patent: **10.11.2004**
(21) Application number: 98850195.3
(22) Date of filing: 16.12.1998
(51) Int. Cl.: F16C 33/36

(54) **Roller bearing**
Rollenlager
Palier à rouleaux

(30) Priority: 22.12.1997 SE 9704865
(43) Date of publication of application: 30.06.1999
(73) Proprietor: SKF Nova AB, 412 88 Göteborg (SE)
(72) Inventor: Druet, Clair, 73420 Drummettaz Clarafond (FR); Klaassen, Vello, 431 39 Mölndal (SE); Rosengren, Filip, 417 28 Göteborg (SE)
(74) Representative: Westman, Per Börje Ingemar

(56) References cited:
- DE-A- 19 734 134
- DE-C- 537 156
- FR-A- 879 067
- GB-A- 1 319 591
- US-A- 3 281 191
- US-A- 3 734 584
- US-A- 3 934 957
- US-A- 4 780 003

## Description

### TECHNICAL FIELD

The present invention relates to a roller bearing in accordance with the preamble of claim 1.

### BACKGROUND OF THE INVENTION

In certain applications it is necessary to support a high thrust load in combination with a radial load under the restrictions of limited bearing section height. A previously known way of solving this problem resides in the combination of a needle roller and a ball bearing. The needle roller bearing is used to support the main part of the radial load and the ball bearing is used to support the thrust load. However, a draw back of this solution is that it can be quite expensive and it can also force the designer to limit the thrust load and/or increase the section height of the bearing in order to increase the load carrying capacity of the ball bearing.

US 2,251,555 discloses a frictionless roller bearing comprising a structure embodying a roller bearing comprising an elongated substantially cylindrical body having a plurality of axially spaced circumferentially extending V-shaped grooves formed therein, the periphery of said body between said grooves being of a contour curving circumferentially and axially of said body, said body, at its opposite ends, terminating at the base of a groove; and a retaining ring engaging, adjacent the inner edge of one of its faces, an end face of said rollers adjacent the perimeter thereof. A major difference between the invention described above and the present invention is that the invention disclosed in US 2,251,555 is not intended to support axial loads. A main object of that invention is to decrease the area of frictional contact resulting in decreased friction. The possibility of supporting axial loads was not conceived.

In US-2,266,888 an antifriction bearing is disclosed. Said bearing comprises a journal having its bearing area provided throughout the length thereof with circumferential corrugations, an opposing box having its bearing surface similarly provided throughout its length with corrugations matching those of the journal, a series of rollers in spaced relation between the two bearing surfaces provided over their bearing lengths with circumferential corrugations similar to those on the bearing surfaces of the journal and box and interfitting in load carrying relation therewith, said circumferential corrugations on the rollers and on the journal and the box having their side surfaces of convex contour and providing a restricted area of contact between opposing corrugations at points intermediate the tops and bases of said corrugations, and means for maintaining the rollers in spaced relation including a gear on each end of the rollers and gears on the journal and box, respectively, at each end thereof with which the gears on the rollers engage. As in US-2,251,555, a major difference is that the invention disclosed in US 2,266,888 is not intended to support axial loads. The primary object of that invention is the provision of a bearing, in which frictional resistance is reduced. The possibility of supporting axial loads was not conceived in this case either.

GB-A-1 319 591 discloses a roller bearing comprising an inner and an outer ring in concentrical arrangement, a series of roller element being arranged in the space between said rings and being in contact with raceways provided in said rings, which raceways are provided with parallel grooves, each one of said grooves being arranged in a plane of rotation of said rings and extending along the entire envelope surface, and in mutual correspondence to said inner and outer rings and being arranged for mating interaction with protruding flanges of said roller elements corresponding to said grooves, said protruding flanges extending along the entire envelope surface of said roller elements. In such a bearing there are no provisions for giving the bearing an internal preload.

### CHARACTERIZING PARTS AND ESSENTIAL FEATURES OF THE INVENTION

Characteristics of the present invention are that in a roller bearing comprising an inner and an outer ring in concentrical arrangement, a series of roller element being arranged in the space between said rings and being in contact with raceways provided in said rings, which raceways are provided with parallel grooves, each one of said grooves being arranged in a plane of rotation of said rings and extending along the entire envelope surface, and in mutual correspondence to said inner and outer rings and being arranged for mating interaction with protruding flanges of said roller elements corresponding to said grooves, said protruding flanges extending along the entire envelope surface of said roller elements, there is a slightly different distance between two arbitrary, adjacently arranged grooves of said inner and outer rings and between two adjacently arranged corresponding protruding flanges of said roller elements for causing a certain internal preload in the bearing.

### DESCRIPTION OF THE DRAWINGS

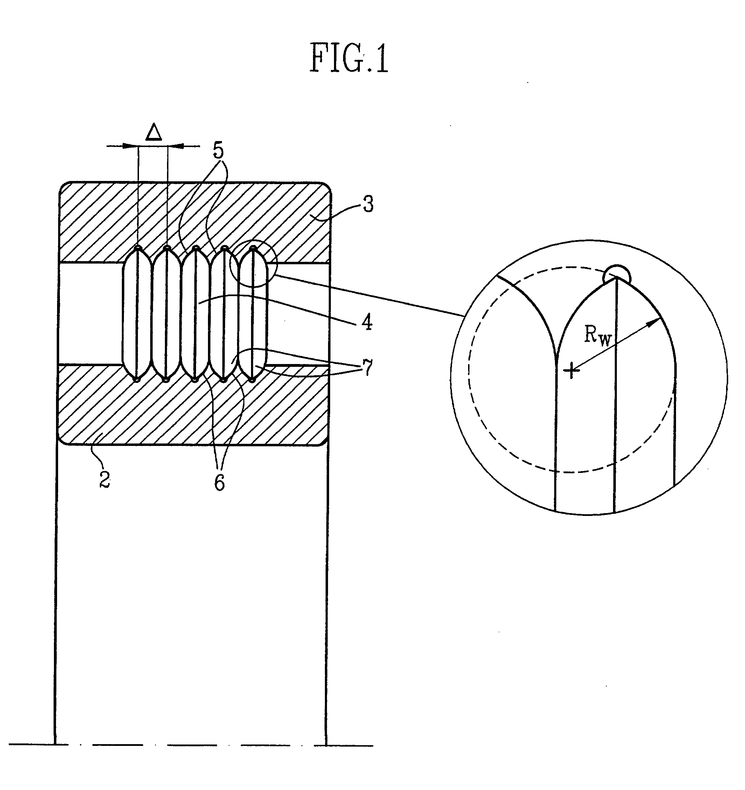

Figure 1 shows a sectional view of a preferred embodiment of a roller bearing according to the present invention.

### DESCRIPTION OF A PREFERRED EMBODIMENT

In figure 1 a part of a roller bearing 1 is presented. The bearing 1 is constituted by an inner and an outer ring 2, 3 in concentrical arrangement, a series of roller elements 4, of which only one is shown in figure 1. The roller elements 4 are arranged in the space between the inner and outer rings 2, 3 and are in contact with raceways provided in the rings 2, 3. The raceways are provided with parallel grooves 5, 6. Each one of all grooves 5, 6 are arranged in the plane of rotation of the rings 2, 3 and extend along the entire envelope surface. The grooves 5, 6 are in mutual correspondence to said inner and outer rings 2, 3 and are arranged for mating interaction with protruding flanges 7 of said roller elements 4 corresponding to the grooves 5, 6. The protruding flanges 7 extend along the entire envelope surface of the roller elements 4.

In the figure it is illustrated that there is a slightly different distance Δ between two arbitrary, adjacently arranged grooves 5, 6 of the inner and outer rings 2, 3 and between two adjacently arranged corresponding protruding flanges 7 of the roller elements 4 for causing a certain internal preload in the bearing 1. The object of the preload is to reduce axial and radial play. One way of accomplishing the distance Δ is to arrange at least one washer-like element arranged in the plane of rotation in one or both of the rings 2, 3. The number and thickness of the washer-like elements may vary depending on desired preload or the desired application. Another way of accomplishing the distance Δ is to arrange at least one washer-like element to at least one of the roller elements 4.

Also, the shapes of the grooves 5, 6 of the inner and outer rings 2, 3 are arranged to be determined by predetermined radii R_{w}. The shapes are arranged to correspond to the forms of the protruding flanges 7 of the roller elements 4. The shapes of the corresponding protruding flanges 7 of at least one roller element 4 are arranged to be determined by predetermined radii R_{w}. It should be noted that the shapes of the flanges 7 do not necessarily have to be of the same magnitude, i.e. a flange provided on one end of a roller element 4 does not have to present the same shape as a flange arranged on the middle of a roller element 4. Of course, this requires that the corresponding grooves have to be adjusted accordingly. However, for practical purposes, all predetermined radii are normally arranged to be of equal magnitude.

## Claims

1. A roller bearing (1) comprising an inner and an outer ring (2, 3) in concentrical arrangement, a series of roller element(4) being arranged in the space between said rings (2, 3) and being in contact with raceways provided in said rings (2, 3), which raceways are provided with parallel grooves (5, 6), each one of said grooves (5, 6) being arranged in a plane of rotation of said rings (2, 3) and extending along the entire envelope surface, and in mutual correspondence to said inner and outer rings (2, 3) and being arranged for mating interaction with protruding flanges (7) of said roller elements (4) corresponding to said grooves (5, 6), said protruding flanges (7) extending along the entire envelope surface of said roller elements (4),
**characterized in**
**that** there is a slightly different distance (Δ) between two arbitrary, adjacently arranged grooves (5, 6) of said inner and outer rings (2, 3) and between two adjacently arranged corresponding protruding flanges (7) of said roller elements (4) for causing a certain internal preload in the bearing (1).

2. A roller bearing (1) according to claim 1,
**characterized in**
**that** said distance (Δ) is arranged to be accomplished by at least one washer-like element arranged in the plane of rotation in one or both of said rings (2, 3).

3. A roller bearing (1) according to claim 1,
**characterized in**
**that** said distance (Δ) is arranged to be accomplished by at least one washer-like element arranged at at least one of said roller elements (4).

4. A roller bearing (1) according to claim 1,
**characterized in**
**that** the shapes of said grooves (5, 6) of said inner and outer rings (2, 3) are arranged to be determined by predetermined radii (R_{w}).

5. A roller bearing (1) according to claim 1,
**characterized in**
**that** the shapes of said corresponding protruding flanges (7) of at least one roller element (7) are arranged to be determined by predetermined radii (R_{w}).

6. A roller bearing (1) according to claim 4 and 5,
**characterized in**
**that** all predetermined radii (R_{w}) are arranged to be of equal magnitude.

## Patentansprüche

1. Ein Wälzlager (1), das einen inneren und einen äußeren Ring (2, 3) in konzentrischer Anordnung umfaßt, wobei eine Reihe von Wälzkörpern (4) in dem Raum zwischen den Ringen (2, 3) angeordnet ist und mit in den Ringen (2, 3) vorgesehenen Laufbahnen in Kontakt steht, die mit parallelen Nuten (5, 6) versehen sind, wobei jede dieser sich entlang der gesamten Hüllfläche erstreckenden Nuten (5, 6) in einer Rotationsebene der Ringe (2, 3) in gegenseitiger Entsprechung an dem inneren bzw. äußeren Ring (2, 3) angeordnet ist und passend mit den den Nuten (5, 6) entsprechenden, hervorstehenden Wangen (7) der Wälzkörper (4) zusammenwirkt, wobei sich die vorstehenden Wangen (7) entlang der gesamten Hüllfläche der Wälzkörper (4) erstrecken, **dadurch gekennzeichnet, daß** ein leicht unterschiedlicher Abstand (Δ) zwischen zwei beliebigen, benachbart angeordneten Nuten (5, 6) des inneren bzw. äußeren Rings (2, 3) und zwischen zwei benachbart angeordneten zugeordneten hervorstehenden Wangen (7) der Wälzkörper (4) zum Hervorrufen einer bestimmten inneren Vorlast in dem Lager (1) besteht.

2. Ein Wälzlager (1) nach Anspruch 1, **dadurch gekennzeichnet, daß** der Abstand (Δ) durch wenigstens ein einer Unterlegscheibe ähnliches Element geschaffen ist, das in der Drehebene an einem oder beiden Ringen (2, 3) angeordnet ist.

3. Ein Wälzlager (1) nach Anspruch 1, **dadurch gekennzeichnet, daß** der Abstand (Δ) durch wenigstens ein einer Unterlegscheibe ähnliches Element geschaffen ist, das an wenigstens einem der Wälzkörper (4) angeordnet ist.

4. Ein Wälzlager (1) nach Anspruch 1, **dadurch gekennzeichnet, daß** die Formen der Nuten (5, 6) des inneren und äußeren Rings (2, 3) durch vorher festgelegte Radien (R_{w}) bestimmt sind.

5. Ein Wälzlager (1) nach Anspruch1, **dadurch gekennzeichnet, daß** die Formen der zugeordneten hervorstehenden Wangen (7) wenigstens eines Wälzkörpers (4) durch vorher festgelegte Radien (R_{w}) bestimmt sind.

6. Ein Wälzlager (1) nach Anspruch 4 und 5, **dadurch gekennzeichnet, daß** alle vorher festgelegten Radien (R_{w}) gleich groß sind.

## Revendications

1. Roulement à rouleaux (1) comprenant des bagues intérieure et extérieure (2, 3) en agencement concentrique, une série d'éléments de rouleau (4) étant disposés dans l'espace entre lesdites bagues (2, 3) et étant en contact avec des pistes réalisées dans lesdites bagues (2, 3), ces pistes étant munies de rainures parallèles (5, 6), chacune desdites rainures (5, 6) étant agencée dans un plan de rotation desdites bagues (2, 3) et s'étendant le long de la totalité de la surface d'enveloppe, et en correspondance mutuelle avec lesdites bagues intérieure et extérieure (2, 3), et étant agencée pour une interaction d'accouplement avec des flasques saillants (7) desdits éléments de rouleau (4) correspondant auxdites rainures (5, 6), lesdits flasques saillants (7) s'étendant le long de la totalité de la surface d'enveloppe desdits éléments de rouleau (4),
**caractérisé en ce que** :
il y a une distance légèrement différente (Δ) entre deux rainures disposées de façon adjacente et arbitraire (5, 6) desdites bagues intérieure et extérieure (2, 3) et entre deux flasques saillants correspondants disposés de façon adjacente (7) desdits éléments de rouleau (4), de façon à provoquer une certaine pré-charge interne dans le roulement (1).

2. Roulement à rouleaux (1) selon la revendication 1, **caractérisé en ce que** ladite distance (Δ) est agencée de façon à être réalisée par au moins un élément en forme de rondelle agencé dans le plan de rotation de l'une ou des deux desdites bagues (2, 3).

3. Roulement à rouleaux (1) selon la revendication 1, **caractérisé en ce que** ladite distance (Δ) est agencée de façon à être réalisée par au moins un élément en forme de rondelle agencé au niveau d'au moins l'un desdits éléments de rouleau (4).

4. Roulement à rouleaux (1) selon la revendication 1, **caractérisé en ce que** les formes desdites rainures (5, 6) desdites bagues intérieure et extérieure (2,3) sont agencées de façon à être déterminées par des rayons prédéterminés (R_{w}).

5. Roulement à rouleaux (1) selon la revendication 1, **caractérisé en ce que** les formes desdits flasques saillants correspondants (7) d'au moins un élément de rouleau (7) sont agencées de façon à être déterminées par des rayons prédéterminés (R_{w}).

6. Roulement à rouleaux (1) selon les revendications 4 et 5, **caractérisé en ce que** tous les rayons prédéterminés (R_{w}) sont agencés de façon à être de valeur égale.
